# EUROPÄISCHE PATENTSCHRIFT

(11) **EP 1 537 348 B1**
(45) Veröffentlichungstag und Bekanntmachung des Hinweises auf die Patenterteilung: **01.02.2006**
(21) Anmeldenummer: 03794810.6
(22) Anmeldetag: 03.09.2003
(51) Int. Cl.: F16J 1/16

(54) **KOLBENBOLZENBUCHSE**
GUDGEON PIN BUSH
COUSSINET D'AXE DE PISTON

(30) Priorität: 06.09.2002 DE 10241465
(43) Veröffentlichungstag der Anmeldung: 08.06.2005
(73) Patentinhaber: Federal-Mogul Wiesbaden GmbH & Co.KG, 65201 Wiesbaden (DE)
(72) Erfinder: ANDLER, Gerd, 65307 Bad Schwalbach (DE); WILHELM, Maik, 55270 Ober-Olm (DE); DENGLER, Andreas, 65307 Bad Schwalbach (DE); WEIL, Gerhard, 65597 Hünfelden (DE)
(86) Internationale Anmeldenummer: PCT/DE2003/002928
(87) Internationale Veröffentlichungsnummer: WO 2004/025145

(56) Entgegenhaltungen:
- DE-A- 3 728 847

## Beschreibung

Die Erfindung betrifft eine Kolbenbolzenbuchse. Ferner betrifft die Erfindung ein Verfahren zur Herstellung einer derartigen Kolbenbolzenbuchse.

Kolbenbolzenbuchsen sind Buchsen, die im kleinen Pleuelauge von Pleuelstangen für Verbrennungsmotoren vorgesehen sind. Bei hochbelasteten Motoren ist das Problem aufgetreten, dass die Buchse insbesondere im mittleren Bereich (bezogen auf die Radialachse der Buchse) beim Einlaufen des Motors zum Einfressen neigt.

Kolbenbuchsen können massiv aus einem Werkstoff sein oder eine Träger- und eine Gleitschicht aufweisen. Wenn im folgenden von Gleitschicht die Rede ist, wird damit auch der an der Innenfläche liegende Werkstoffabschnitt eine Massivkolbenbolzenbuchse gemeint.

In der Vergangenheit konzentrierte man sich eher auf das Problem der Krafteinlenkung und Spannungsverteilung im Bereich Kolben-Pleuel-Verbindung.

In der DE 37 28 847 A wird die Oberflächenrauhigkeit des Kolbenbalzens auf oder über eine bestimmte Grenze hinaus verbessert. Dies wird dort durch eine durchschnittliche Oberflächenrauhigkeit Ra von 0,1 µm oder weniger erreicht.

In der DE 30 36 062 C2 wird versucht, die Spannungsspitzen im oberen Bereich der Bolzennarben zu vermeiden, indem die Kante der Kolbenbolzenbohrung verrundet wird bzw. die Kolbenbolzenbohrung aufgeweitet wird.

Gemäß der DE 41 33 586 A1 werden örtliche Überlastungen der Kolbenlagerbuchse verhindert, indem die an die Stirnseiten angrenzenden Endbereiche der Pleuelstangenbohrung, d.h. des kleinen Pleuelauges nachgiebig gestaltet werden. Dazu werden entweder Entlastungsnuten eingearbeitet oder die Wanddicke minimiert.

In der DE 198 28 847 A1 wird eine ausreichende Lebensdauer der Kolbenbolzenbuchse bei höheren Betriebskräften dadurch erreicht, dass im Übergangsbereich zwischen den Scheitellinien der Buchse Materialverringerungen, insbesondere Durchbrechungen vorgesehen werden. Dadurch wird der Radialdruck auf den Bereich der Buchsenenden verlagert.

Gemäß der DE 100 29 950 A1 werden die Druckspitzen am äußeren Rand des Pleuelauges, die durch das Verbiegen des Bolzens bei Belastung hervorgerufen werden, dadurch aufgefangen, dass das Pleuelauge als Formbohrung gestaltet ist, die von der zylindrischen Form abweicht und zwar derart, dass sie der Verformung des Kolbenbolzens folgt. Die Verwendung einer Buchse soll dadurch überflüssig werden. Auch Entlastungsnuten, die aufwendig zu fertigen sind und daher teuer sind und die außerdem zu Ölverlust führen, werden überflüssig.

Auf eine Buchse zu verzichten hat aber auch Nachteile: Einerseits kann nur durch Einsatz einer Buchse eine optimale Reibpaarung zwischen Pleuel und Kolbenbolzen erreicht werden. Andererseits tragen die Buchsen auch dazu bei, die Fluchtung mit dem großen Pleuelauge auszurichten, in dem die Buchsen nach dem Einbau nachbearbeitet werden.

In der EP 0 716 240 B1 geht es darum, den Fresswiderstand eines Gleitlagers zu erhöhen. Dies wird dort durch eine definierte Oberflächenstruktur erreicht, die sich von der Lagerlegierungsschicht über die Zwischenschicht bis in die Deckschicht fortsetzt. Diese Berg-Tal-Struktur mit bestimmten Bedingungen an die Berghöhe, die Zwischenschichtdicke und die Deckschichtdecke hat den Effekt, dass auch nach einem gewissen Abrieb Anteile der Deck- und Zwischenschicht zur Gleitoberfläche gehören und damit als Schmiermittel zur Verfügung stehen.

Gleitlager unterscheiden sich aber prinzipiell hinsichtlich Beanspruchungsart und Schmierungsbedingungen von Buchsen. Die Gleitlager sind druckölgeschmiert und aufgrund der großen Relativgeschwindigkeiten zwischen Welle und Lager bildet sich meist ein hydrodynamischer Schmierfilm aus. Im kleinen Pleuelauge hingegen kommt es zwischen Kolbenbolzen und Kolbenbolzenbuchse meist nur zu kleinen, oszillierenden Relativbewegungen, d.h. es kommt weitaus häufiger zu Mischreibungsbedingungen und dadurch zu Festkörperkontakt. Daher lassen sich die Erkenntnisse aus der EP 0 716 240 B1 nicht unmittelbar auf Buchsen, insbesondere Kolbenbolzenbuchsen übertragen.

Vor diesem Hintergrund besteht die Aufgabe darin, eine Kolbenbolzenbuchse, die auch in hochbelasteten Motoren beim Einlaufen des Motors nicht zum Einfressen neigt, und ferner eine geeignetes Herstellungsverfahren bereitzustellen.

Diese Aufgabe wird durch eine Kolbenbolzenbuchse gelöst, deren Gleitschichtoberfläche zumindest im Hauptlastbereich, gemessen über den Buchsenquerschnitt in axialer Richtung, folgende Parameterwerte aufweist:
- in einer Tiefe von maximal 1,800 µm beträgt der Traganteil minimal 99,0%;
- die Tiefe des Rauhigkeitskernprofils beträgt maximal 0,30 µm;
- der Materialanteil Mr1 des Rauhigkeitskernprofils beträgt maximal 8%.

Außerdem wird die Aufgabe dadurch gelöst, dass die Gleitschicht der Kolbenbolzenbuchse durch ein Oberflächenbearbeitungsverfahren endbearbeitet wird.

Bei der Entwicklung der erfindungsgemäßen Kolbenbolzenbuchse hat sich erstaunlicherweise herausgestellt, dass dem Problem nicht alleine durch eine Optimierung des Lagerwerkstoffes bezüglich Zusammensetzung, Aufbau und Gefügestruktur beizukommen ist, sondern eine spezifisch gestaltete Oberflächentopographie zum Ziel führt. Stellt man Kolbenbolzenbuchsen mit der erfindungsgemäß definierten Oberflächenstruktur zur Verfügung, kann ein Fressen während der Einlaufphase wirkungsvoll verhindert werden.

Der Traganteil in einer gewissen Schnitttiefe lässt sich dadurch feststellen, dass z. Bsp. im Rahmen der Messung eines Rauhigkeitprofils Schichten im Zehntel-µm-Bereich sukzessive abgetastet werden und nach jedem Tastschritt festgestellt wird, wie hoch der Anteil an Vollmaterial an der Gesamtoberfläche ist. Einen Traganteil von 100 % erhält man unterhalb des tiefsten Tals des Rauhigkeitsprofils. Es hat sich herausgestellt, daß ein Fressen während der Einlaufphase verhindert wird, wenn schon in geringer Schnittiefe der Traganteil möglichst hoch ist.

Ein weiterer Parameter zur Bestimmung der Güte der Gleitflächentopologie der Kolbenbolzenbuchse ist die Tiefe des Rauhigkeitsprofils, der sogenannte Rk-Wert. Trägt man die Schnitttiefe gegen den Materialanteil (auch Traganteil genannt) auf, hat man in der Regel einen Kurvenverlauf, der zwischen einem steilen Abfall bei kleinen Traganteilen und einem steilen Abfall bei hohen Traganteilen einen breiten, flachen Abschnitt aufweist. Die genaue Bestimmung des Rk-Wertes ist in EN ISO 13565-2 beschrieben. Sehr gute Ergebnisse bezüglich des fressfreien Einlaufens erreicht man bei den erfindungsgemäßen Kolbenbolzenbuchsen, wenn der Rk-Wert der Gleitschicht im Hauptlastbereich maximal 0,30 µm beträgt.

Auch die Bestimmung des Materialanteils Mr1 des Rauhigkeitskernprofils, der in Prozent angegeben wird und durch die Schnittlinie bestimmt ist, die die herausragenden Spitzen von dem Rauhigkeitskernprofil abtrennt, ist in EN ISO 13565-2 definiert. Mr1 sollte maximal 8% betragen. Vorzugsweise sollte Mr1 maximal 7% betragen.

Besonders bevorzugt sind Kolbenbolzenbuchsen, deren Gleitschichtoberfläche im Hauptlastbereich in einer Schnitttiefe von maximal 0,900 µm einen Traganteil von minimal 99,0 % aufweisen. Dabei hat es sich von Vorteil erwiesen, wenn der Rk-Wert der Gleitschicht im Hauptlastbereich maximal 0,15 µm beträgt.

Die erfindungsgemäßen Kolbenbolzenbuchsen können zusätzlich durch die Halbwertsbreite der Häufigkeitsverteilung des Rauhigkeitsprofils charakterisiert werden. Dazu wird die Häufigkeit von Bergen und Tälern der Gleitschichtoberfläche in Abhängigkeit von deren Höhenunterschied aufgetragen. Vorzugsweise beträgt die Breite der Verteilung bei halbem Maximum höchstens 0,20 µm, besonders bevorzugt sind höchstens 0,10 µm.

Erfindungsgemäß wird die Oberflächencharakteristik der zuvor beschriebenen Kolbenbolzenbuchsen dadurch hergestellt, dass sie durch Oberflächenbearbeitungsverfahren wie z.B. Hohnen, Reiben, Schleifen, Läppen, Kalibrieren, Polieren, Räumen, Feindrehen oder Erodieren auf das geforderte Oberflächenprofil endbearbeitet werden. Als besonders vorteilhaft hat sich das Plateauhohnen erwiesen, bei dem in mehreren Stufen die Oberfläche besonders eben gestaltet werden kann.

In einer bevorzugten Ausführungsform weist die erfindungsgemäße Kolbenbolzenbuchse eine Gleitschicht auf, die zumindest zuäußerst aus einer bleifreien Kupferlegierung besteht. Besonders bevorzugt sind die Systeme CuAl (Aluminiumbronze), CuZn (Messing) oder CuSnZn (Rotguß).

Die besonderen Vorteile der Gleitschichtoberfläche der erfindungsgemäßen Kolbenbolzenbuchse hinsichtlich ihres Widerstandes gegen Einlauffressen können sowohl mit heterogen aufgebauten Gefügestrukturen als auch mit homogen aufgebauten Gefügestrukturen erreicht werden. Dies ist besonders wichtig, wenn bei den Lagerwerkstoffen aus Umwelt- bzw. Fertigungsgründen auf das Legierungselement Blei verzichtet werden muß. Durch die spezielle Oberflächenstruktur können die fehlenden besonderen tribologischen Eigenschaften des Bleis zumindest kompensiert werden, d.h. auch ohne Blei als Legierungselement kommt es im Anwendungsfall zu keinem Einlauffressen.

Die Erfindung soll anhand der folgenden Diagramme und Abbildungen näher erklärt werden. Dazu zeigen:
- Figur 1a: das Rauhigkeitsprofil einer ersten Kolbenbolzenbuchse,
- Figur 1b: den Materialanteil bei verschiedenen Schnitttiefen einer ersten Kolbenbolzenbuchse,
- Figur 1c: die Häufigkeitsverteilung der Rauhigkeiten einer ersten Kolbenbolzenbuchse,
- Figur 2a: das Rauhigkeitsprofil einer zweiten Kolbenbolzenbuchse,
- Figur 2b: den Materialanteil bei verschiedenen Schnitttiefen einer zweiten Kolbenbolzenbuchse,
- Figur 2c: die Häufigkeitsverteilung der Rauhigkeiten einer zweiten Kolbenbolzenbuchse,
- Figur 3a: das Rauhigkeitsprofil einer herkömmlichen Kolbenbolzenbuchse,
- Figur 3b: den Materialanteil bei verschiedenen Schnitttiefen einer herkömmlichen Kolbenbolzenbuchse,
- Figur 3c: die Häufigkeitsverteilung der Rauhigkeiten einer herkömmlichen Kolbenbolzenbuchse,
- Figur 4a: eine Rasterelektronenmikroskopaufnahme der Gleitschichtoberfläche einer erfindungsgemäßen Kolbenbolzenbuchse und
- Figur 4b: eine Rasterelektronenmikroskopaufnahme der Gleitschichtoberfläche einer herkömmlichen Kolbenbolzenbuchse.

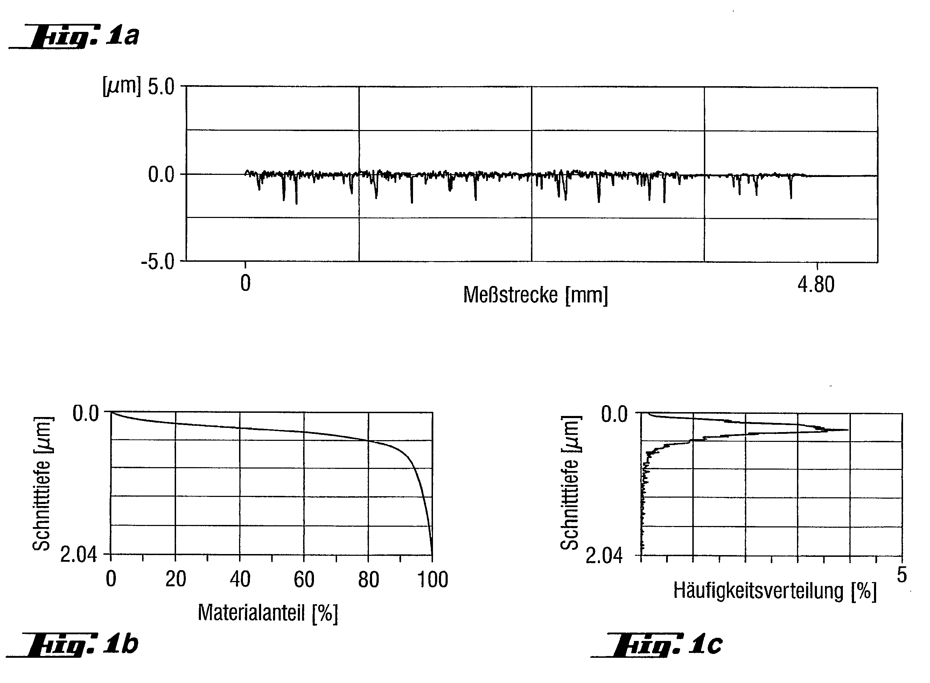

In Figur 1 a ist das Rauhigkeitsprofil einer ersten Kolbenbolzenbuchse dargestellt. Die Gleitfläche dieser ersten Kolbenbolzenbuchse wurde einer mechanischen Oberflächenglättung unterzogen. Die gesamte Taststrecke betrug 4,80 mm, die Gesamthöhe des Profils Rₜ (EN ISO 4287), liegt bei ca. 2 µm. Die Oberfläche der Gleitschicht wurde sukzessive in 0,150 µm Schnitttiefenschritten ausgemessen. Bei jeder Schnitttiefe wurde der Traganteil bestimmt. Außerdem wurden die Werte Rk und Mr1 bestimmt. Die Ergebnisse sind in Tabelle 1 zusammengefasst.

Wie in Tabelle 1 erkennbar, weist diese erste Kolbenbolzenbuchse bei einer Schnitttiefe von 1,800 µm einen Traganteil von 99,5 % auf. Außerdem hat ihre Gleitschichtoberfläche einen Rk-Wert von 0,26 µm und einem Mr1-Wert von 5,9%.

In Figur 1 b ist die Schnitttiefe gegen den Traganteil aufgetragen. Aus dieser Verteilung ergibt gemäß EN ISO 13565-2 ein Rk-Wert von 0,26 µm.

In Figur 1c ist die Häufigkeit der einzelnen Unebenheiten aufgetragen. Diese Verteilung weist eine Halbwertsbreite von 0,18 µm auf.

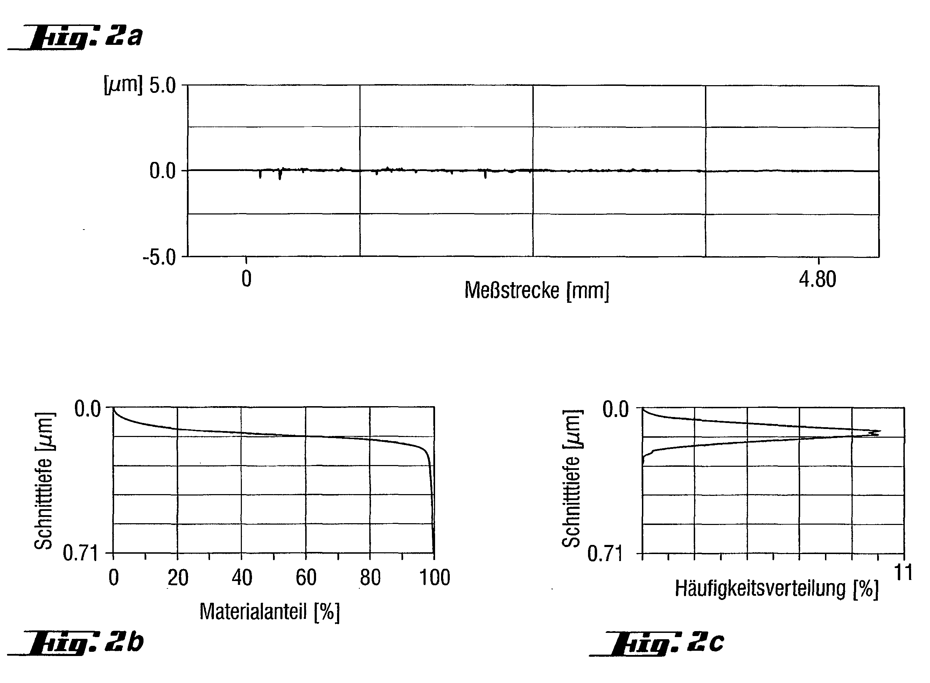

Die durch die Figuren 2a-c und Tabelle 2 beschriebene zweite erfindungsgemäße Kolbenbolzenbuchse wurde durch Plateauhohnen endbearbeitet. Bei einer Schnitttiefe von nur 0,45 µm weist sie bereits einen Traganteil von 99,7 % auf. Ein Traganteil von 100 % wird bereits bei einer Schnitttiefe von 0,75 µm erreicht. Der Rk-Wert ist mit 0,11 µm viel geringer als bei der ersten Kolbenbolzenbuchse. Der Mr1-Wert ist mit 6,9 % hingegen höher. Die Halbwertsbreite der Häufigkeitsverteilung beträgt 0,08 µm und ist damit weitaus geringer als bei der ersten Kolbenbuchse. Es hat sich gezeigt, daß diese zweite Kolbenbuchse auch für den Einsatz bei höchsten Lasten optimal geeignet ist.

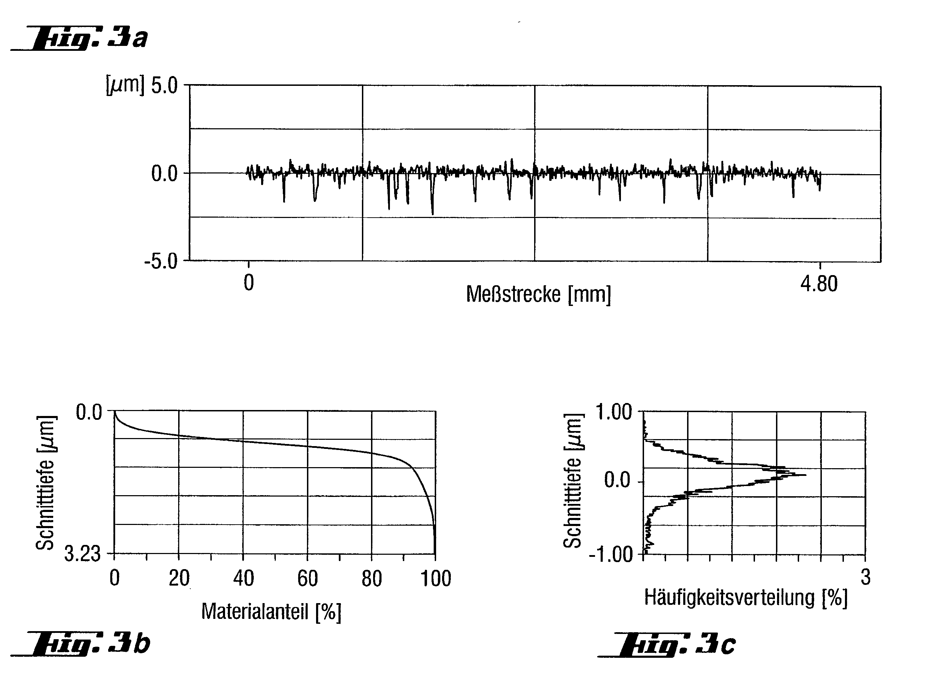

Zum Vergleich sind in den Figuren 3a, b und c sowie in Tabelle 3 die Messwerte für eine herkömmliche Kolbenbolzenbuchse dargestellt. Bei einer Schnitttiefe von 0,450 µm beträgt der Traganteil erst 4,7 %, bei einer Schnittiefe von 0,900 µm 68,7 %, bei einer Schnitttiefe von 1,200 µm 90,0 % und bei einer Schnitttiefe von 1,800 µm 96,2 %. Erst bei einer Schnitttiefe von 2,400 µm wird die 99%-Grenze beim Traganteil überschritten. Der Rk-Wert ist mit 0,52 µm doppelt so groß wie bei der ersten erfindungsgemäßen Kolbenboizenbuchse. Der Mr1-Wert ist mit 9,9 % viel höher als bei beiden erfindungsgemäßen Kolbenbolzenbuchsen. Die Halbwertsbreite der Rauhigkeits-Häufigkeitsverteilung ist mit 0,66 µm sogar mehr als 3-mal so groß wie bei der ersten erfindungsgemäßen Kolbenbolzenbuchse.

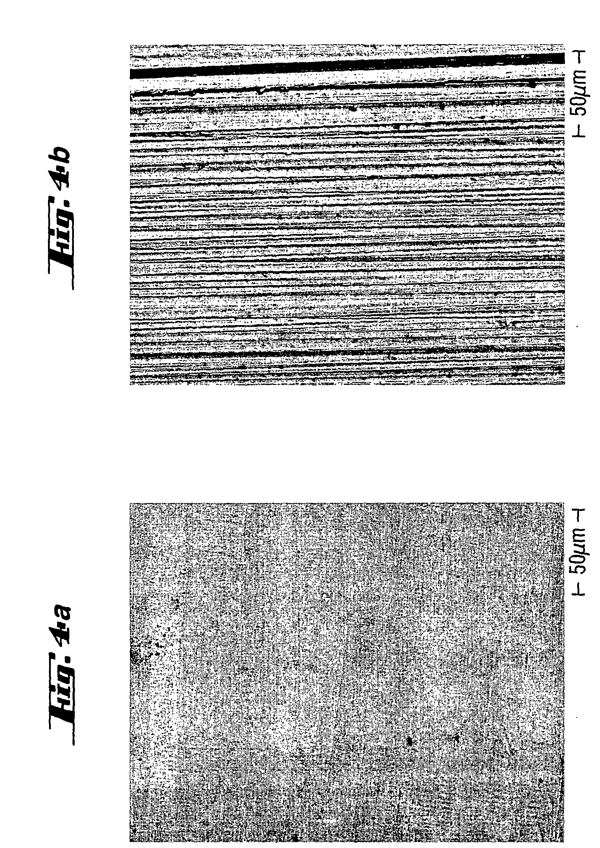

In den Figuren 4a und 4b sind Rasterelektronenmikroskopaufnahmen einer erfindungsgemäßen Kolbenbolzenbuchse (Figur 4a) und einer herkömmlichen Kolbenbolzenbuchse (Figur 4b) dargestellt. Die Oberfläche der Gleitschicht der erfindungsgemäßen Kolbenbolzenbuchse wurde durch Plateauhohnen endbearbeitet, so dass sich eine Oberfläche sehr geringer Rauhigkeit mit hohem Traganteil schon in geringer Schnitttiefe ergibt. Die Oberfläche der Gleitschicht der herkömmlichen Kolbenbolzenbuchse hingegen wurde durch grobes Hohnen bearbeitet. Dies führt zu einem ausgeprägtem Streifenmuster, das sehr große Rauhigkeiten aufweist. Diese führen insbesondere beim Einsatz der Kolbenbolzenbuchse in hochbelasteten Motoren zum Einfressen beim Einlaufvorgang.

**Tabelle 1: Rk = 0,26 µm, Mr1 = 5,9 %**

| Schnitttiefe | Traganteil |
|---|---|
| 0,150 µm | 14,6 % |
| 0,300 µm | 64,6 % |
| 0,450 µm | 85,3 % |
| 0,600 µm | 91,4 % |
| 0,750 µm | 93,7 % |
| 0,900 µm | 95,2 % |
| 1,050 µm | 96,2 % |
| 1,200 µm | 97,0 % |
| 1,350 µm | 97,8 % |
| 1,500 µm | 98,5 % |
| 1,650 µm | 99,1 % |
| 1,800 µm | 99,5 % |
| 1,950 µm | 99,8 % |
| 2,100 µm | 100,0 % |
| 2,250 µm | 100,0 % |
| 2,400 µm | 100,0 % |
| 2,550 µm | 100,0 % |
| 2,700 µm | 100,0 % |
| 2,850 µm | 100,0 % |
| 3,000 µm | 100,0 % |

**Tabelle 2: Rk = 0,11 µm, Mr1 = 6,9 %**

| Schnitttiefe | Traganteil |
|---|---|
| 0,150 µm | 73,4 % |
| 0,300 µm | 99,2% |
| 0,450 µm | 99,7 % |
| 0,600 µm | 99,9 % |
| 0,750 µm | 100,0% |
| 0,900 µm | 100,0 % |
| 1,050 µm | 100,0 % |
| 1,200 µm | 100,0 % |
| 1,350 µm | 100,0 % |
| 1,500 µm | 100,0 % |
| 1,650 µm | 100,0 % |
| 1,800 µm | 100,0 % |
| 1,950 µm | 100,0 % |
| 2,100 µm | 100,0 % |
| 2,250 µm | 100,0 % |
| 2,400 µm | 100,0 % |
| 2,550 µm | 100,0 % |
| 2,700 µm | 100,0 % |
| 2,850 µm | 100,0 % |
| 3,000 µm | 100,0 % |

**Tabelle 3: Rk = 0,52 µm, Mr1 = 9,9 %**

| Schnitttiefe | Traganteil |
|---|---|
| 0,150 µm | 0,4 % |
| 0,300 µm | 1,1 % |
| 0,450 µm | 4,7 % |
| 0,600 µm | 17,8 % |
| 0,750 µm | 43,5 % |
| 0,900 µm | 68,7 % |
| 1,050 µm | 83,6 % |
| 1,200 µm | 90,9 % |
| 1,350 µm | 93,2 % |
| 1,500 µm | 94,3 % |
| 1,650 µm | 95,3 % |
| 1,800 µm | 96,2 % |
| 1,950 µm | 96,8 % |
| 2,100 µm | 97,7 % |
| 2,250 µm | 98,4 % |
| 2,400 µm | 99,1 % |
| 2,550 µm | 99,5 % |
| 2,700 µm | 99,7 % |
| 2,850 µm | 99,8 % |
| 3,000 µm | 99,9 % |

## Patentansprüche

1. Kolbenbolzenbuchse, **dadurch gekennzeichnet, daß** deren Gleitschichtoberfläche zumindest im Hauptlastbereich, gemessen über den Buchsenquerschnitt in axialer Richtung, folgende Parameterwerte aufweist:
- in einer Tiefe von maximal 1,800 µm beträgt der Traganteil minimal 99,0%;
- die Tiefe des Rauhigkeitskernrofils beträgt maximal 0,30 µm;
- der Materialanteil Mr1 gemäß EN ISO13565-2 des Rauhigkeitskernprofils beträgt maximal 8%.

2. Kolbenbolzenbuchse nach Anspruch 1, **dadurch gekennzeichnet, daß** der Materialanteil Mr¹ des Rauhigkeitskernprofils maximal 7% beträgt.

3. Kolbenbolzenbuchse nach Anspruch 1 oder 2, **dadurch gekennzeichnet, daß** in einer Tiefe von maximal 0,900 µm der Traganteil minimal 99,0% beträgt.

4. Kolbenbolzenbuchse nach Anspruch 3, **dadurch gekennzeichnet, daß** die Tiefe des Rauhigkeitskernprofils maximal 0,15 µm beträgt.

5. Kolbenbolzenbuchse nach einem der Ansprüche 1 bis 4, **dadurch gekennzeichnet, daß** die Gleitschicht aus einer bleifreien Kupferbasislegierung besteht.

6. Kolbenbolzenbuchse nach Anspruch 5, **dadurch gekennzeichnet, daß** die Gleitschicht aus einer Kupfer-Aluminium-, einer Kupfer-Zink- oder einer Kupfer-Zinn-Zink-Legierung besteht.

7. Kolbenbolzenbuchse nach Anspruch 1 bis 6, **dadurch gekennzeichnet, daß** die Häufigkeitsverteilung des Rauhigkeitsprofils der Gleitschichttopographie eine Halbwertsbreite von maximal 0,20 µm aufweist.

8. Kolbenbolzenbuchse nach Anspruch 1 bis 7, **dadurch gekennzeichnet, daß** die Häufigkeitsverteilung des Rauhigkeitsprofils der Gleitschichttopographie eine Halbwertsbreite von maximal 0,10 µm aufweist.

9. Verfahren zur Herstellung einer Kolbenbolzenbuchse nach einem der Ansprüche 1 bis 8, **dadurch gekennzeichnet, daß** die Gleitschicht der Kolbenbolzenbuchse durch ein Oberflächenbearbeitungsverfahren endbearbeitet wird.

10. Verfahren nach Anspruch 9, **dadurch gekennzeichnet, daß** die Gleitschicht der Kolbenbolzenbuchse durch Plateauhohnen endbearbeitet wird.

## Claims

1. Gudgeon pin bush, **characterised in that**, measured over the cross-section of the bush in the axial direction, the surface of its sliding layer has parameters of the following values, at least in the region of principal load:
- at a maximum depth of 1.8 µm the percentage contact area is a minimum of 99%,
- the depth of the core roughness profile is a maximum of 0.3 µm,
- the material ratio Mr1 under EN ISO 13565-2 of the core roughness profile is a maximum of 8%.

2. Gudgeon pin bush according to claim 1, **characterised in that** the material ratio Mr1 of the core roughness profile is a maximum of 7%.

3. Gudgeon pin bush according to claim 1 or 2, **characterised in that** at a maximum depth of 0.9 µm the percentage contact area is a minimum of 99%.

4. Gudgeon pin bush according to claim 3, **characterised in that** the depth of the core roughness profile is a maximum of 0.15 µm.

5. Gudgeon pin bush according to one of claims 1 to 4, **characterised in that** the sliding layer comprises a lead-free alloy based on copper.

6. Gudgeon pin bush according to claim 5, **characterised in that** the sliding layer comprises a copper/aluminium alloy, a copper/zinc alloy or a copper/tin/zinc alloy.

7. Gudgeon pin bush according to claims 1 to 6, **characterised in that** the frequency distribution of the roughness profile of the topography of the sliding layer has a half-value width of a maximum of 0.2 µm.

8. Gudgeon pin bush according to claims 1 to 7, **characterised in that** the frequency distribution of the roughness profile of the topography of the sliding layer has a half-value width of a maximum of 0.1 µm.

9. Method of producing a gudgeon pin bush according to one of claims 1 to 8, **characterised in that** the sliding layer of the gudgeon pin bush is finish-machined by a surface finishing process.

10. Method according to claim 9, **characterised in that** the sliding layer of the gudgeon pin bush is finish-machined by plateau honing.

## Revendications

1. Coussinet d'axe de piston, **caractérisé par le fait que** la surface de sa couche de glissement présente, au moins dans la zone de charge principale, les valeurs de paramètres suivantes, mesurées en direction axiale sur la section du coussinet :
- sur une profondeur de 1 800 µm au maximum, le taux de portance est au minimum de 99,0 % ;
- la profondeur du profil de rugosité écrêté ou central est de 0,30 µm au maximum ;
- le pourcentage de matière Mr1 selon EN ISO 13565-2 du profil de rugosité écrêté ou central est de 8 % au maximum.

2. Coussinet d'axe de piston selon la revendication 1, **caractérisé par le fait que** le pourcentage de matière Mr1 du profil de rugosité écrêté ou central est de 7 % au maximum.

3. Coussinet d'axe de piston selon la revendication 1 ou 2, **caractérisé par le fait qu'**à une profondeur de 0,900 µm au maximum, le taux de portance est au minimum de 99,0 %.

4. Coussinet d'axe de piston selon la revendication 3, **caractérisé par le fait que** la profondeur du profil de rugosité écrêté ou central est de 0,15 µm au maximum.

5. Coussinet d'axe de piston selon l'une des revendications 1 à 4, **caractérisé par le fait que** la couche de glissement consiste en un alliage à base de cuivre sans plomb.

6. Coussinet d'axe de piston selon la revendication 5, **caractérisé par le fait que** la couche de glissement consiste en un alliage cuivre-aluminium, un alliage cuivre-zinc ou un alliage cuivre-étain-zinc.

7. Coussinet d'axe de piston selon les revendications 1 à 6, **caractérisé par le fait que** la distribution de fréquence du profil de rugosité de la topographie de la couche de glissement présente une largeur à mi-hauteur de 0,20 µm au maximum.

8. Coussinet d'axe de piston selon les revendications 1 à 7, **caractérisé par le fait que** la distribution de fréquence du profil de rugosité de la topographie de la couche de glissement présente une largeur à mi-hauteur de 0,10 µm au maximum.

9. Procédé de fabrication d'un coussinet d'axe de piston selon l'une des revendications 1 à 8, **caractérisé par le fait que** la finition de la couche de glissement du coussinet d'axe de piston est réalisée par un procédé de traitement de surface.

10. Procédé selon la revendication 9, **caractérisé par le fait que** la finition de la couche de glissement du coussinet d'axe de piston est réalisée par honage sur plateau.
